# EUROPÄISCHE PATENTSCHRIFT

(11) **EP 3 519 898 B1**
(45) Veröffentlichungstag und Bekanntmachung des Hinweises auf die Patenterteilung: **29.10.2025**
(21) Anmeldenummer: 17784579.9
(22) Anmeldetag: 29.09.2017
(51) Int. Cl.: G03H 1/04, G03H 1/08, G03H 1/26, G03H 1/02

(54) **DIGITALES HOLOGRAPHISCHES MIKROSKOP MIT EINEM INTERFEROMETER MIT MEHRFACHEM VERSATZ**
DIGITAL HOLOGRAPHIC MICROSCOPE WITH A MULTIPLE OFFSET INTERFEROMETER
MICROSCOPE HOLOGRAPHIQUE NUMÉRIQUE AVEC UN INTERFÉROMÈTRE À DÉCALAGE MULTIPLE

(30) Priorität: 30.09.2016 DE 102016219018
(43) Veröffentlichungstag der Anmeldung: 07.08.2019
(73) Patentinhaber: Siemens Healthineers AG, 91301 Forchheim (DE)
(72) Erfinder: ENGEL, Thomas, 73432 Aalen (DE); HAYDEN, Oliver, 85368 Moosburg (DE)
(74) Vertreter: Siemens Healthineers Patent Attorneys
(86) Internationale Anmeldenummer: PCT/EP2017/074769
(87) Internationale Veröffentlichungsnummer: WO 2018/060420

(56) Entgegenhaltungen:
- WO-A1-2010/122530
- COLOMB T ET AL: "Polarization microscopy by use of digital holography: Application to optical-fiber birefringence measurements", APPLIED OP, OPTICAL SOCIETY OF AMERICA, WASHINGTON, DC; US, vol. 44, no. 21, 20 July 2005 (2005-07-20), pages 4461 - 4469, XP009155311, ISSN: 0003-6935, DOI: 10.1364/AO.44.004461
- CAOJIN YUAN ET AL: "Resolution improvement in digital holography by angular and polarization multiplexing", APPLIED OPTICS, OPTICAL SOCIETY OF AMERICA, WASHINGTON, DC; US, vol. 50, no. 7, 1 March 2011 (2011-03-01), pages B6 - B11, XP001560720, ISSN: 0003-6935, [retrieved on 20100909], DOI: 10.1364/AO.50.0000B6
- TATSUKI TAHARA ET AL: "Parallel phase-shifting dual-illumination phase unwrapping", OPTICAL REVIEW, SPRINGER, BERLIN, DE, vol. 19, no. 6, 4 December 2012 (2012-12-04), pages 366 - 370, XP035148025, ISSN: 1349-9432, DOI: 10.1007/S10043-012-0059-X
- BHARGAB DAS ET AL: "Parallel-quadrature phase-shifting digital holographic microscopy using polarization beam splitter", OPTICS COMMUNICATIONS, vol. 285, no. 24, 1 November 2012 (2012-11-01), AMSTERDAM, NL, pages 4954 - 4960, XP055436412, ISSN: 0030-4018, DOI: 10.1016/j.optcom.2012.07.101

## Beschreibung

Die Erfindung betrifft digitale holographische Mikroskope und Verfahren zur Erweiterung eines Eindeutigkeitsbereichs bei Messungen, insbesondere bei holografischen bzw. interferometrischen Messungen.

Die vorliegende Erfindung betrifft ein digitales holographisches Mikroskop DHM und ein Verfahren zur Erfassung und Bearbeitung eines Gesamtbildes eines gemessenen Objektes, das ebenso als Messobjekt bezeichnet werden kann, insbesondere einer Zellstruktur oder eines zu prüfenden Objektes.

Herkömmlicherweise erfolgt eine Anwendung eines Konzeptes einer synthetischen Wellenlänge aus einer Auswertung von Bildern mit zwei oder mehreren unterschiedlichen Wellenlängen.

Zur effektiven 3D Vermessung von Zellen und Zellagglomeraten ist ein großer Tiefenmessbereich vorteilhaft. Auch ist ein großer Tiefenmessbereich vorteilhaft, wenn neben Zellen auch Feststoffe in Fluiden, beispielsweise Körperfluiden und/oder Sekreten, erfasst werden sollen. Bei einem Ein-Wellenlängen Interferometer ist der Tiefenmessbereich auf eine Wellenlänge begrenzt. Zur Vergrößerung des Messbereichs wird deshalb oft eine zweite leicht unterschiedliche Wellenlänge dazu genommen. So werden 2 unabhängige Interferogramme aufgenommen. Der Eindeutigkeitsbereich der Messung für die kombinierte synthetische Wellenlänge liegt beim kleinsten gemeinsamen Vielfachen der Wellenlängen geteilt durch die Differenz der Wellenlängen. Dieses Vorgehen wird mit dem Begriff "synthetische Wellenlängen" beschrieben. WO 2010/122530 A1 zeigt ein digitales holographisches Mikroskop in der Form eines lateralen Scherinterferometers.

Es ist Aufgabe der Erfindung Digitale Holographische Mikroskope (DHM), und insbesondere dazugehörige Bildbearbeitungsverfahren derart zu verbessern, dass ein Eindeutigkeitsbereich bei Messungen, insbesondere bei holografischen Messungen, verbessert wird. Es soll insbesondere eine Tiefen- oder Dickeninformation von Messobjekten erhalten werden.

Die Aufgabe wird durch eine Vorrichtung gemäß dem Hauptanspruch und ein Verfahren gemäß dem Nebenanspruch gelöst.

Gemäß einem ersten Aspekt wird ein Digitales Holographisches Mikroskop zur Erfassung und Bearbeitung eines mit einem ersten Versatz gemessenen ersten Gesamtbildes eines Messobjektes vorgeschlagen mit einer Einrichtung zur Erzeugung mindestens eines weiteren Gesamtbildes mit mindestens einem zum ersten Versatz verschiedenen Versatz.

Bei einem Interferometer entsteht das Streifenmuster durch eine Neigung von zwei Strahlbündeln zueinander. Im Falle ebener Wellen in den Strahlbündeln entsteht so dann ein äquidistantes Streifenmuster, wobei der Streifenabstand vom Neigungswinkel der beiden Strahlenbündel zueinander abhängt. In unserem Fall wird im Interferometer das Licht fokussiert, wobei der Fokus im "prismatischen" Umlenkspiegel liegt. Dieser Fokus ist dann die Lichtquelle, die von der nachfolgenden Linse L2 kollimiert wird, so dass wieder nahezu ebene Wellen entstehen - die aber auch eine Objektinformation tragen. Durch den lateralen Versatz im prismatischen Umlenkspiegel kann der Ort dieser Lichtquelle verschoben werden, was dann die Strahlneigung des kollimierten Strahls beeinflusst bzw. festlegt.

Gemäß einem zweiten Aspekt wird ein Verfahren zur Erfassung eines überlagerte Informationsanteile verschiedener Abbildungsmodi enthaltenden und mittels eines Digitalen Holographischen Mikroskops gemessenen Gesamtbildes, beispielsweise einer biologischen Zellstruktur, eines Zellagglomerats, einer medizinischen Probe, und/oder von Feststoffen, Sedimenten und/oder Mikrokristallen in Körperfluiden und/oder Sekreten, im Objektraum, mit den mittels einer Rechnereinrichtung ausgeführten Schritten eines variablen Einstellens eines Versatzes, insbesondere mittels Kippens einer doppelbrechenden Platte vorgeschlagen.

Gemäß einem dritten Aspekt wird ein Verfahren zur gemeinsamen Auswertung eines mittels eines Digitalen Holographischen Mikroskops gemessenen Gesamtbildes, beispielsweise einer biologischen Zellstruktur, mit einer ersten und einer zweiten Erfassungseinrichtung im Objektraum, vorgeschlagen, wobei mittels einer Rechnereinrichtung die Polarisationswirkung der biologischen Zellstruktur bestimmt wird.

Gemäß einem vierten Aspekt wird ein Verfahren zur Charakterisierung einer Probe vorgeschlagen, wobei eine Probe mit einem digitalen Holographischen Mikroskop gemessen wird.

Versatz bedeutet insbesondere einen Laufzeitunterschied, mit dem Wellenfronten insbesondere kohärenten Lichts, zueinander räumlich verschoben beziehungsweise versetzt sind. Versatz heißt im Englischen "offset". Da gemäß dieser Anmeldung ein eingestellter Versatz mittels eines optischen Elementes, beispielsweise einer Linse, eine Richtungsänderung von Wellenfronten hier aufeinander zu derart bewirkt, dass Wellenfronten sich unter einem Winkel überlagern. Im Englischen wird ein derartiger Winkel "Shear"-Winkel genannt. Versatz und Winkel stehen physikalisch miteinander in Beziehung, insbesondere über die Brennweite der die Richtungsänderung bewirkenden Linse. Beispielsweise kann die Relation "Winkel ist proportional zum Quotient aus Versatz/Brennweite der Linse" die physikalische Beziehung beschreiben.

Die neue vorgeschlagene Lösung besteht darin, dass man zur Vergrößerung des Eindeutigkeitsbereichs der interferometrischen Messung im Interferometer, für die unterschiedlichen Polarisationsrichtungen des Lichtfeldes einen unterschiedlichen Strahlversatz wählt, der dann im Interferogramm bei Überlagerung zueinander geneigter Strahlenbündel zu unterschiedlichen Streifenbreiten führt. Je größer der Strahlversatz in dem im Beispiel gezeigten Interferometer gewählt wird, umso kleiner die Streifenbreite bzw. der Streifenabstand.

Der Vorteil des vorgeschlagenen Systems besteht darin, dass mit nur wenigen zusätzlichen Komponenten - nämlich der doppelbrechenden Platte, dem polarisierenden Strahlteiler und der zusätzlichen Kamera bereits ein Messsystem mit erweitertem Messbereich realisierbar ist. Eine Erweiterung mit mehreren Wellenlängen ist möglich. Zudem lässt sich das Intensitätsverhältnis für die Bilder mit den unterschiedlichen Polarisationseinrichtungen über die relative Ausrichtung der Polarisation des einfallenden Lichts einstellen. Ist das einfallende Licht nicht polarisiert, kann zu dem Zweck der Intensitätseinstellung zusätzlich ein Polarisator im Strahlengang vorsehen.

Aufgrund der oben beschriebenen Asymmetrie ergibt sich hier der Vorteil, dass auch ein Bildanteil in einem der Kanäle aus dem reinen Intensitätsbild vorliegt. Je größer der Shearwinkel für diese Polarisationsrichtung ist, desto größer ist der relative Anteil dieses Intensitätsbildes.

Weitere vorteilhafte Ausgestaltungen werden in Verbindung mit den Unteransprüchen beansprucht.

Die Erfindung wird anhand von Ausführungsbeispielen in Verbindung mit den Figuren näher beschrieben. Es zeigen:
- Figur 1: ein erstes Ausführungsbeispiel eines Digitalen Holographischen Mikroskops DHM;
- Figur 2: ein erstes Ausführungsbeispiel eines Versatz-Interferometers;
- Figur 3: ein zweites Ausführungsbeispiel eines Versatz-Interferometers;
- Figur 4: ein drittes Ausführungsbeispiel eines Versatz-Interferometers;
- Figur 5: ein viertes Ausführungsbeispiel eines Versatz-Interferometers;
- Figur 6: ein fünftes Ausführungsbeispiel eines Versatz-Interferometers;
- Figur 7: ein sechstes Ausführungsbeispiel eines Versatz-Interferometers;
- Figur 8: ein siebtes Ausführungsbeispiel eines Versatz-Interferometers;
- Figur 9: ein achtes Ausführungsbeispiel eines Versatz-Interferometers;
- Figur 10: ein neuntes Ausführungsbeispiel eines Versatz-Interferometers;
- Figur 11: ein Ausführungsbeispiel eines erfindungsgemäßen Verfahrens;
- Figur 12: ein Beispiel eines Rohbildes eines Streifenmusters;
- Figur 13: ein Beispiel eines Bildes eines Objektes ohne Streifenmuster;
- Figur 14: ein Beispiel eines konjugierten Bildes;
- Figur 15: ein Beispiel eines Gesamtbildes mit einem ersten Versatz;
- Figur 16: das Beispiel des Gesamtbildes mit einem zweiten Versatz;
- Figur 17: das Beispiel des Gesamtbildes mit einem dritten Versatz.

Die beiliegenden Figuren sollen ein weiteres Verständnis der beanspruchten Erfindung vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Figuren. Die Elemente der Figuren sind nicht notwendigerweise maßstabsgetreu zueinander dargestellt. Gleiche, funktionsgleiche und gleich wirkende Elemente, Merkmale und Komponenten sind in den Figuren, sofern nichts anderes ausgeführt ist, jeweils mit denselben Bezugszeichen versehen.

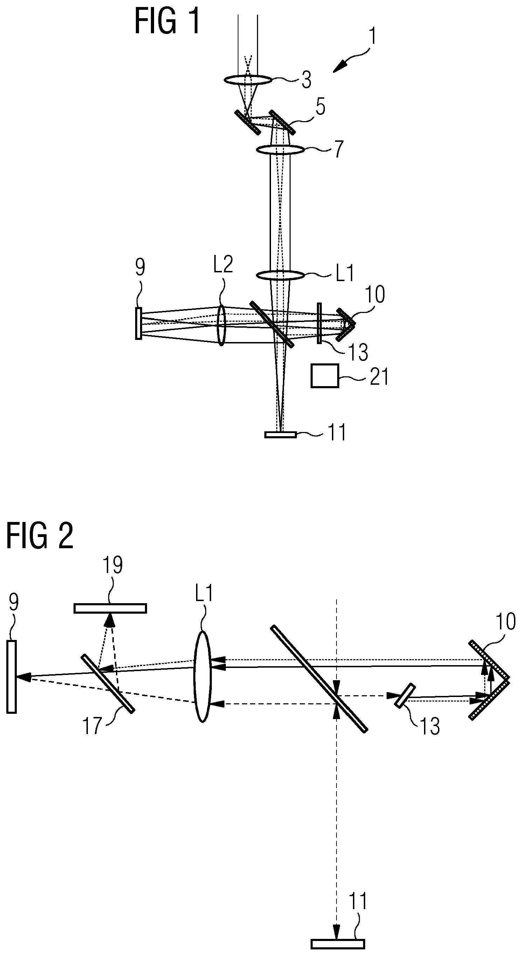

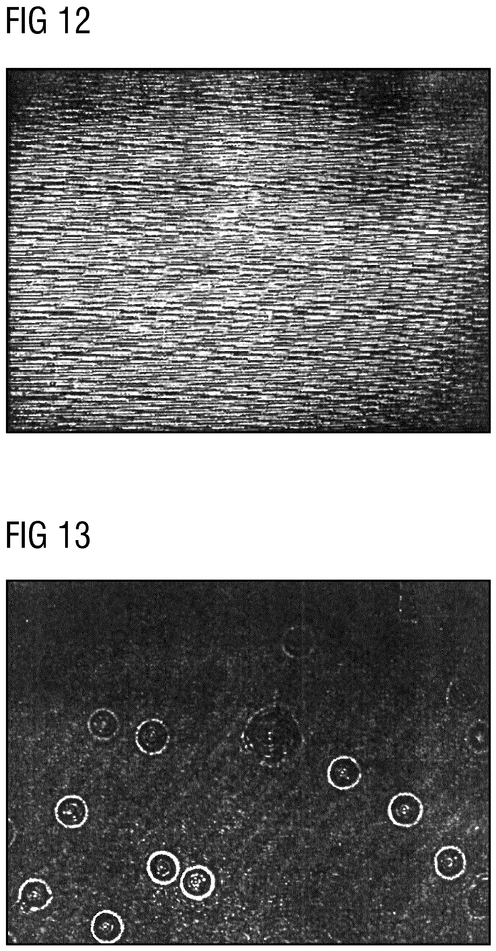

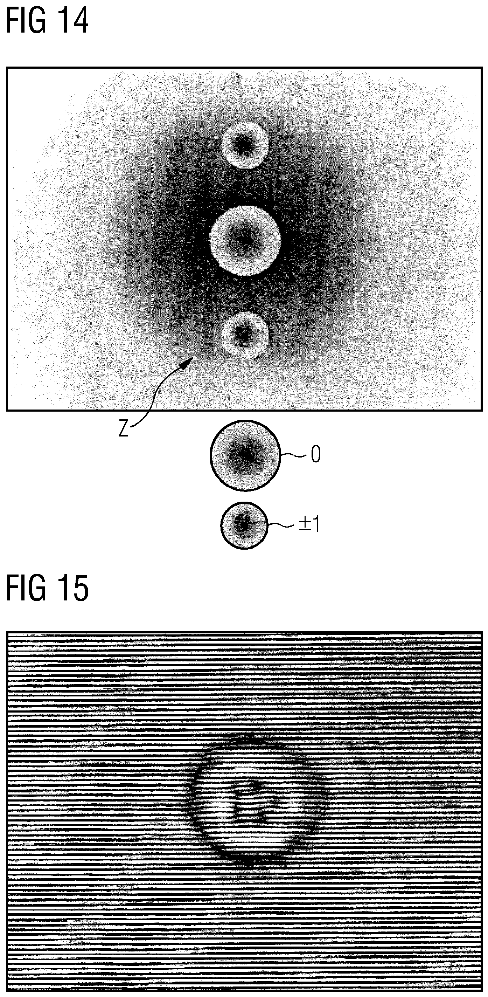

Figur 1 zeigt ein Ausführungsbeispiel einer Erfassungseinrichtung in Ausgestaltung eines Digitalen Holographischen Mikroskops. Es ist vorteilhaft ein kleines Streifenmuster mit einer großen Streifendichte zu haben. Das spreizt im Fourierraum - als Ausführungsbeispiel eines konjugierten Raums - die ersten Ordnungen des Streifenmusters von der nullten Ordnung. Die hohe Frequenz des Streifenmusters überlappt mit dem Frequenzinhalt der jeweiligen Objektbilder, die beispielsweise Bilder von Zellen sein können, wie diese beispielsweise gemäß Figur 13 dargestellt sind. Das Streifenmuster kann mittels weiterer Verfahren wieder aus einem Gesamtbild herausgetrennt werden. Neue Verfahren nutzen hierfür eine große Spreizung eines ersten und eines nullten Ordnungsbestandteils in einem Fourierbild gemäß Figur 14, wobei ein "synthetischer" Fourierraum in einem ausgeschnittenen Bereich vergrößert werden kann, woraus eine hohe Ortsauflösung des rekonstruierten Bildes resultiert beziehungsweise möglich wird.

Figur 1 zeigt ein digitales holographisches Mikroskop 1 mit einen ersten Abbildungsstrahlpfad für ein Interferometer zur Erzeugung eines Streifenmusters, und einen zweiten Abbildungsstrahlpfad zur Erzeugung eines mikroskopischen Bildes, wobei beide Pfade überlagert sind und Daten eines Messbildes in einer Rechnereinrichtung bearbeitet und insbesondere in einer Speichereinrichtung abgelegt werden können. Objektseitig ist eine Objektivlinse 3 angeordnet, die einen Abbildungsstrahl von einem Objekt, beispielsweise einer Zelle, über ein Spiegelsystem 5 und eine Tubuslinse 7 sowie Linsen L1 und L2 zu einer Kamera oder Erfassungseinrichtung 9 durchlässt, wobei 11 einen Punktspiegel bezeichnet. Bezugszeichen 10 bezeichnet einen Versatzspiegel. Versatz bedeutet hier eine laterale Verschiebung (Laufzeitunterschied), mit der Wellenfronten kohärenten Lichts zueinander räumlich verschoben beziehungsweise versetzt sind. Eine doppelbrechende Platte 13 als ein den Versatz einstellendes optisches Element ist im zweiten Abbildungsstrahlpfad zu und von dem Versatzspiegel 10 positioniert. Die doppelbrechende Platte 13 ist mittels einer Positionierungseinrichtung 21 positionierbar und bewegbar, insbesondere drehbar oder kippbar. Es kann insbesondere ein Streifenmuster oder Linienmuster erzeugt sein (auf Englisch fringe pattern). Ausschneiden oder "Cropping" bedeutet insbesondere eine Bildbearbeitung, bei dem Anteile eines konjugierten Bildes oder transformierten Objektbildes, insbesondere Fourierbildes, ausgeschnitten werden.

Für die Aufspaltung des Lichtstrahls in dem einen Arm des Interferometers wird vorgeschlagen, eine doppelbrechende Platte einzusetzen, die passend orientiert aus einem doppelbrechenden Kristall geschnitten ist. Die Platte kann planparallel oder auch keilförmig ausgeführt sein. Die Aufspaltung hängt von der Orientierung der optischen Achsen im doppelbrechenden Kristall und der Dicke des Materials ab. Durch Kippen der Platte im Strahl kann die Aufspaltung der Strahlen fein eingestellt werden. Durch die plan-parallel Platte werden die Strahlen mit den unterschiedlichen Polarisationsrichtungen lediglich lateral versetzt. Ist die Platte keilförmig, kommt abhängig von der Richtung des Keils eine Winkelaufspaltung hinzu. Durch die Winkelaufspaltung verändert sich dann das Streifenmuster im Interferogramm weiter.

Im Interferometer werden dann die so aufgespaltenen Strahlen mit einem Referenzstrahl überlagert. Es entsteht ein Streifenmuster, wo der Streifenabstand vom Winkel (Shear-Winkel) von Messstrahl und Referenzwelle abhängt. Im vorliegenden Beispiel bewirkt der laterale Versatz mittels einer Linse L2 einen Winkel zwischen den Wellenfronten der erzeugten kollimierten Strahlenbündel.

Vor der Kamera wird dann ein polarisierender Strahlteiler in den Strahl eingebaut. Die Polarisationsaufteilung vom Strahlteiler und die Richtung der optischen Achsen im doppelbrechenden Kristall sollten zueinander justiert bzw. ausgerichtet sein, um optimale Ergebnisse zu erhalten.

In dem Aufbau gibt es noch eine Asymmetrie für die Strahlen, wo aufgrund des Keilwinkels zwischen den überlagerten (kollimierten) Strahlen die Polarisationsvektoren parallel sind und denen, wo die Polarisationsvektoren einen geringen Winkel miteinander einschließen. Aufgrund des geringen Winkels hat dann das Interferogramm einen geringen Untergrund eines nicht interferierenden Intensitätsbildes zu dem Bild des Streifenmusters des Interferogramms.

Wenn die Lichtquelle zur Beleuchtung des optischen Systems in der Abbildung unpolarisiert ist, ist deren Ausrichtung egal. Ist die Lichtquelle aber polarisiert oder zumindest teilpolarisiert, so kann über die Drehung der Polarisationseinrichtung der Lichtquelle relativ zu den Achsenrichtungen der doppelbrechenden Platte bzw. den Polarisationsebenen des Strahlteilers dann das Verhältnis der Intensitäten eingestellt werden, wie das Licht auf die beiden Kameras aufgeteilt wird.

Jedes der Bilder mit dem unterschiedlichen Streifenabstand wird dann von einer getrennten Kamera aufgenommen, die jeweils in einem der Strahlwege hinter dem Strahlleiter angeordnet sind.

Prinzipiell ist es weiterhin möglich, auch mehr als eine Wellenlänge zur Beleuchtung des optischen Systems in der Abbildung einzusetzen. Damit bleibt alles voran Gesagte gültig. Die Strahlen der mindestens zwei Lichtquellen werden dann vorteilhaft auf einer Achse vereinigt.

Da die Doppelbrechung auch wellenlängenabhängig ist und zudem der Streifenabstand bei gleichem optischem Aufbau auch von der Wellenlänge abhängt, so ergeben sich dann mit jeder weiteren genutzten Wellenlänge zwei weitere Streifenmuster - eines für jede der vom Strahlteiler vorgegebenen Polarisationsrichtungen. So lässt sich auch der Messbereich weiter vergrößern.

Es wird ein Interferometer vorgeschlagen, das über
eine Strahltrennung mittels Polarisation zwei unterschiedliche Fringepattern erzeugt. Für jeden Bildpunkt liegt dadurch nun eine Intensitätsinformation für zwei zueinander orthogonale Polarisationsrichtungen vor. Diese Intensitätsinformation kann auf zwei Arten gewonnen werden:
Erstens als Mikroskopbild unmittelbar, wenn der Referenzstrahlengang geblockt ist und somit das Interferenzmuster unterdrückt ist.

Zweitens aus dem rekonstruierten Bild als Amplitudenbild nach der DHM-Auswertung.

Die Bilder für die beiden Polarisationsrichtungen sollten idealerweise mit gleicher Kameraausrichtung aufgenommen werden oder nach der Bildaufnahme entsprechend ausgerichtet und ggf. auch passend skaliert werden, um Störeffekte durch eine Kameraausrichtung bzw. fehlerhaft Bildskalierung zu vermeiden.

Alternativ kann es vorteilhaft sein, die Kameras in den Achsen passend auszurichten, die Pixelmuster aber dennoch um eine halbe Pixeldiagonale zu versetzen. So kann rechnerisch auch über bekannte Methoden der sogenannten Pixelshift-Verfahren die laterale Auflösung verbessert werden.

Bei dem gewählten DHM Aufbau mit Shear Interferometer können anstelle der zwei Wellenlängen auch zwei Shearbilder mit unterschiedlichen Shear-Winkeln verwendet werden. Durch die unterschiedlichen Shear-Winkel entstehen zwei Systeme von Interferenzen mit unterschiedlicher Periode in der Tiefe und auch im lateralen Abstand. Die Situation ist mit der bei der Erzeugung einer synthetischen Wellenlänge mittels zweier Wellenlängen komplett vergleichbar. Auch hier vergrößert sich der Eindeutigkeitsbereich auf das kleinste gemeinsame Vielfache der Perioden des Interferenzmusters der beiden Shear-Interferenzsysteme. Die hier wählbaren freien Parameter sind die Shearwinkel der beiden Interferenzsysteme bzw. deren Differenzwinkel.

Figur 2 zeigt ein erstes Ausführungsbeispiel eines Versatz-Interferometers insbesondere als Bestandteil eines Digitalen Holographischen Mikroskops 1 gemäß Figur 1. Dieses DHM ist in einer Michelson-Bauart geschaffen. Es ist ein polarisierender Strahlteiler 17 in dem ersten Abbildungsstrahlpfad nach dem Interferometer angeordnet. In Strahlengängen nach dem polarisierenden Strahlteiler 17 erfassen eine erste Erfassungseinrichtung 9 das erste Gesamtbild und eine zweite Erfassungseinrichtung 19 ein zweites Gesamtbild zeitgleich. Die Einrichtung zur Erzeugung des mindestens einen weiteren Gesamtbildes ist eine doppelbrechende Platte 13, die insbesondere aus Kalkspat besteht. Die doppelbrechende Platte 13 ist hier planparallel ausgebildet, und kann alternativ keilförmig geschaffen sein.

Je nach Ort der Strahlaufspaltung im Strahlengang kann dieser an der nachfolgenden Optik noch weiter vergrößert werden.

Dies ist in Figur 2 gut zu sehen. Wenn die Strahlteilerplatten in einen divergenten Strahl eingebracht werden, dann haben sie immer auch eine Wirkung auf die Abbildungsfehler, insbesondere bei der sphärischen Aberration. Diese Effekte sind in den symbolisierten Strahlengängen nicht dargestellt. Auch die Strahlführung ist nur schematisch in der Ebene dargestellt. In Realität kann es notwendig werden, dass mit den polarisierenden Strahlteilern unter 45 Grad orientiert die Zeichenebene verlassen werden muss und der Aufbau in 3D ausgeweitet werden muss.

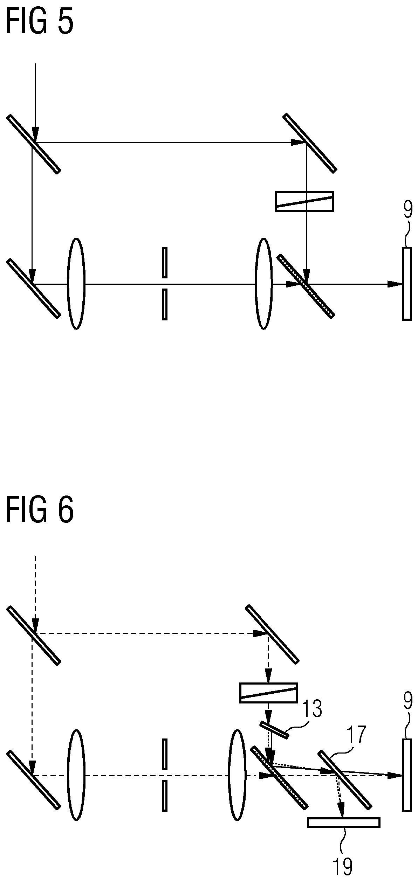

Die Abbildungen 2 und 5 zeigen, dass die vorgeschlagenen Modifikationen in verschiedenen Interferometertypen anwendbar sind. Im Interferometer wird an geeigneter Stelle der Lichtstrahl geteilt und zumindest einer der beiden Teile des Lichtstrahls lateral versetzt. Dieser Strahlversatz bewirkt, dass für die beiden Strahlteile dann in der Bildebene unterschiedliche Interferogramme entstehen.

Wenn in dem Interferometer durch eine Lochblende oder einen punktförmigen Spiegel die Referenzwelle erzeugt wird, ist es vorteilhaft, wenn der laterale Versatz an einer Stelle erzeugt wird, so dass weiterhin ein Referenzspiegel für beide Interferogramme genutzt werden kann.

Um genau zwei unterschiedliche Interferogramme zu erzeugen, wird vorgeschlagen, dass die Strahlaufspaltung mittels Doppelbrechung erfolgt. Bei einem nicht polarisierenden Strahlteiler besteht im weiteren Verlauf des Strahlenganges nicht mehr die Möglichkeit die beiden Teilstrahlen vollständig zu trennen und damit die Interferenzmusters vollständig zu entkoppeln. Vielmehr besteht sogar die Gefahr, dass dann die mindestens 3 Wellen untereinander paarweise interferieren, was zu einer Überlagerung von 3 Interferenzmustern führt. Diese 3 Muster können lediglich aufwändig getrennt werden.

In der Ausführungsform gemäß der beanspruchten Erfindung mit polarisierter Strahlaufspaltung ist vor der Kamera ein polarisierender Strahlteiler vorgesehen, der die beiden Interferenzsysteme trennt und auf die beiden unterschiedlichen Kameras aufteilt. So wird es dann möglich, die beiden Interferenzsysteme gleichzeitig aufzunehmen, wenn die Belichtungszeiten der beiden Kameras synchronisiert sind. Alternativ und somit abweichend von der beanspruchten Erfindung könnte auch nur eine Kamera vorgesehen sein und ein Element zur Selektion der Polarisation wie Polarisationsfilter oder Strahlteiler, der es erlaubt, die gewünschte Polarisationsrichtung auszuwählen. Hier wären auch elektro-optische Bauteile zur Auswahl der Polarisationsrichtung vorstellbar oder das Element für die Auswahl der Polarisationsrichtung wird in die gewollte Polarisationsstellung verdreht/verbracht.

Bei serieller Bildaufnahmen wäre es ebenso gut möglich, einfach die Stelleinheit für die Einstellung des Winkels, der ebenso als Shear bezeichnet werden kann, zwischen den Aufnahmen zu verschieben. Bei bekannter Wellenlänge kann aus dem Bild mit den Interferenzstreifen der Shear unmittelbar berechnet werden.

Wenn die Lichtstrahlen zur Erzeugung der Interferogramme Polarisationsvektoren für die lineare Polarisation haben, die nicht senkrecht auf der Ebene stehen, in der die Strahlen "gesheart" beziehungsweise zueinander mit einem Winkel orientiert werden, so ist das Bild auf der Kamera nicht vollständig moduliert. Auch wenn hier die Winkel klein sind, so bleiben von jedem der einzelnen geshearten Strahlen gewisse kleine Anteile im Intensitätsbild bestehen und überlagern sich auf der Kamera mit dem Interferenzmuster. Dieser Effekt kann über die Wahl der geometrischen Auslegung des Aufbaus für die Polarisationsrichtung und die Shearebene beeinflusst werden und so der Anteil an dem Intensitätsmuster im Bild bestimmt werden. Der Intensitätsanteil vom Referenzstrahl kann bei der Auswertung rechnerisch kompensiert werden, da er aus der Aufnahmen des Referenzbildes bekannt ist. Im Kamerabild verbleibt dann nur noch die Überlagerung aus Interferenzmuster und mikroskopischem Bild des Objekts. Eine Einstellung der Intensitätsverhältnisse der beiden Bilder ist hilfreich, um auch für die Darstellung kleiner Strukturen, so wie sie beispielsweise in weißen Blutzellen vorkommen, hinreichend viel Information bzw. Signal zur Verfügung zu haben.

Im Folgenden bezeichnen zu den vorstehenden Bezugszeichen gleiche Bezugszeichen gleiche Bestandteile.

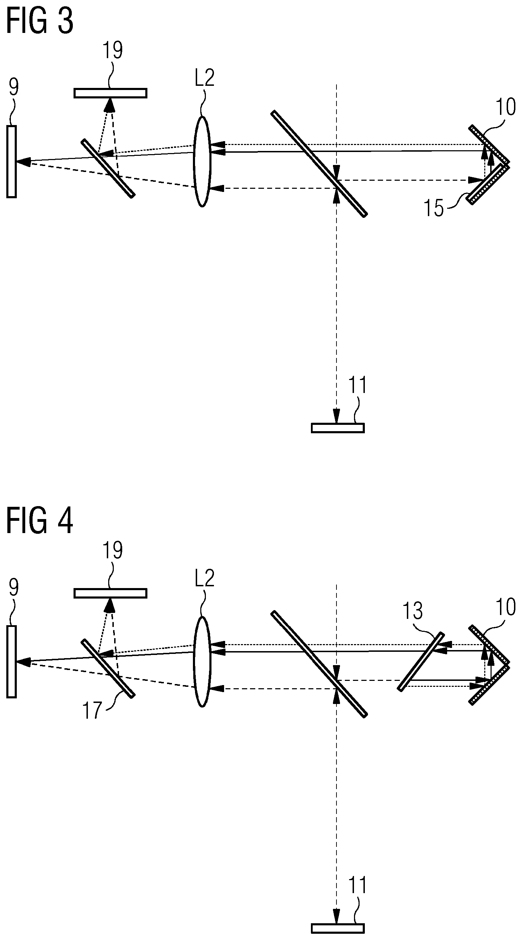

Figur 3 zeigt ein zweites Ausführungsbeispiel eines Versatz-Interferometers insbesondere als Bestandteil eines Digitalen Holographischen Mikroskops 1 gemäß Figur 1. Die Einrichtung zur Erzeugung des mindestens einen weiteren Gesamtbildes ist hier eine doppelbrechende Materialschicht 15 auf einem Versatzspiegel 10.

Figur 4 zeigt ein drittes Ausführungsbeispiel eines Versatz-Interferometers insbesondere als Bestandteil eines Digitalen Holographischen Mikroskops 1 gemäß

Figur 1. Die doppelbrechende Platte 13 ist hier im zweiten Abbildungsstrahlpfad zu und von einem Versatzspiegel 10 positioniert.

Figur 5 zeigt ein viertes Ausführungsbeispiel eines Versatz-Interferometers insbesondere als Bestandteil eines Digitalen Holographischen Mikroskops 1 gemäß Figur 1. Ein Versatz-Interferometer-Bestandteil ist hier in einer Mach-Zehnder-Bauart geschaffen.

Figur 6 zeigt ein fünftes Ausführungsbeispiel eines Versatz-Interferometers insbesondere als Bestandteil eines Digitalen Holographischen Mikroskops 1 gemäß Figur 1. Eine doppelbrechende Platte 13 ist hier in einem Strahlengang nach einer Strahlpfadlängen-Symmetrisierungseinheit angeordnet.

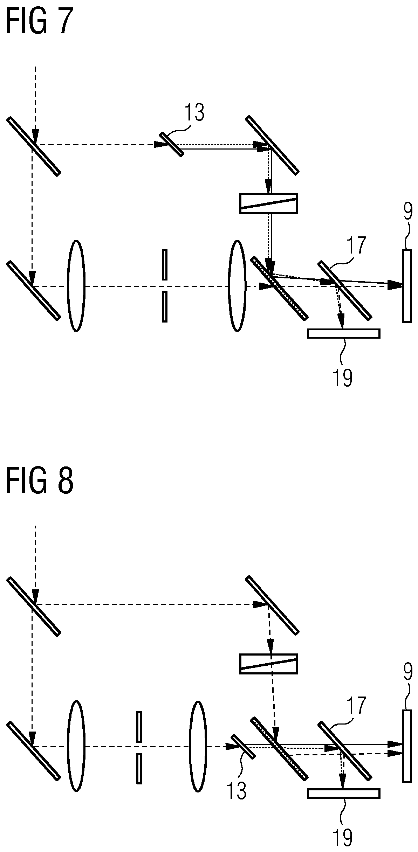

Figur 7 zeigt ein sechstes Ausführungsbeispiel eines Versatz-Interferometers insbesondere als Bestandteil eines Digitalen Holographischen Mikroskops 1 gemäß Figur 1. Eine doppelbrechende Platte 13 ist hier in einem Strahlengang vor einer Strahlpfadlängen-Symmetrisierungseinheit angeordnet.

Figur 8 zeigt ein siebtes Ausführungsbeispiel eines Versatz-Interferometers insbesondere als Bestandteil eines Digitalen Holographischen Mikroskops 1 gemäß Figur 1. Eine doppelbrechende Platte 13 ist hier in einem Strahlengang vor einem Strahlteiler angeordnet.

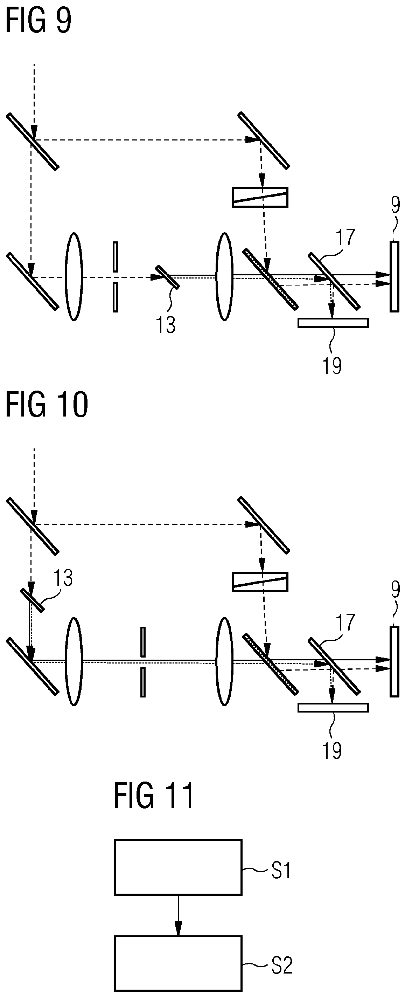

Figur 9 zeigt ein achtes Ausführungsbeispiel eines Versatz-Interferometers insbesondere als Bestandteil eines Digitalen Holographischen Mikroskops 1 gemäß Figur 1. Eine doppelbrechende Platte 13 ist hier in einem Strahlengang nach einem Punktspiegel angeordnet.

Figur 10 zeigt ein neuntes Ausführungsbeispiel eines Versatz-Interferometers insbesondere als Bestandteil eines Digitalen Holographischen Mikroskops 1 gemäß Figur 1. Eine doppelbrechende Platte 13 ist hier in einem Strahlengang vor einem Punktspiegel angeordnet.

Figur 11 zeigt ein Ausführungsbeispiel eines erfindungsgemäßen Verfahrens. Mittels einer Rechnereinrichtung ausgeführten Schritten eines variablen Einstellens eines Versatzes, insbesondere mittels Kippens einer doppelbrechenden Platte, wobei in einem ersten Schritt S1 ein erster Versatz und in einem zweiten Schritt S2 ein zweiter Versatz erzeugt ist.

Figur 12 zeigt eine Darstellung eines Rohbildes eines einem Interferometer zugeordneten Streifenmusters. Dieses Bild kann mittels einer erfindungsgemäßen Erfassungseinrichtung erzeugt worden sein.

Figur 13 zeigt eine Darstellung eines Bildes von biologischen Zellen als Ausführungsbeispiel eines Objektes, und zwar ohne Streifenmuster. Dieses Bild kann mittels einer erfindungsgemäßen Erfassungseinrichtung erzeugt worden sein. Ein derartiges Bild weist eine hohe Auflösung in der Bildebene auf.

Figur 14 zeigt beispielhaft eine typische Darstellung von Fourierbildern von gemessenen Gesamtbildern von biologischen Zellen. Dieses Bild kann mittels einer erfindungsgemäßen Rechnereinrichtung aus dem gemessenen Gesamtbild erzeugt werden. Der Pfeil zeigt auf ein kreisförmiges Beugungsbild oder Beugungsmuster Z einer biologischen Zelle. Der mittlere Kreis stellt eine nullte Beugungsordnung 0 und der obere und der untere Kreis eine symmetrische erste plus 1+ und minus 1-Beugungsordnung dar.

Figur 14 zeigt ein Ausführungsbeispiel eines konjugierten Bildes in Ausgestaltung eines Fourierbildes, hier beispielsweise aus einem gemessenen Gesamtbild einer Zellstruktur, wobei das Fourierbild zwei Abbildungsanteile aufweist, und zwar einen von einem Streifenmuster mit drei Ortsstellen, und einen von einem Objekt, und zwar hier von einer Zellstruktur, der in einem Nullpunkt der drei Ortsstellen zentriert ist. Die Erfindung ermöglicht ein wirksames Trennen der beiden Abbildungsanteile oder Abbildungsmodi in dem Fourierbild voneinander. Die drei Ortsstellen des Streifenmusters sind für jedes Streifenmuster zu der Zentralstelle symmetrisch. Das Muster des Objektes hängt von dessen Ortsfrequenzinhalt ab. Deshalb ist der radiale Abstand zu dem Ursprung relevant zur Wiedergabe der inneren Struktur des Objektes. Das Muster des Objektes ist lediglich zu dem zentralen Nullpunkt der Nullfrequenz der Fourierebene symmetrisch.

Figur 15 zeigt ein Beispiel eines Gesamtbildes mit einem ersten Versatz.

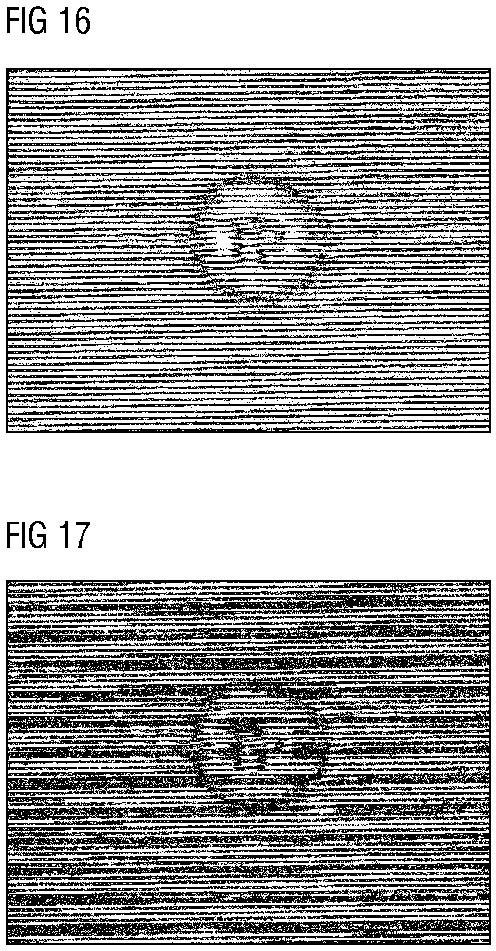

Figur 16 das Beispiel des Gesamtbildes gemäß Figur 15 mit einem zweiten Versatz.

Figur 17 das Beispiel des Gesamtbildes gemäß Figur 15 wenn das Gesamtbild gleichzeitig mit zwei unterschiedlichen Strahlversatzen aufgenommen wird, die überlagert sind.

In dieser Figur 17 zeigt sich ein langwelliges Muster des synthetischen Shear beziehungsweise Winkels und darin ein kurzweiliges Muster mit geringerem Kontrast aus der Überlagerung der beiden kurzwelligen Muster. Die langwellige Struktur kann auch zum Phase-Unwrapping benutzt werden mit dem erweiterten Tiefenbereich analog zu dem bei synthetischen Wellenlängen.

Wichtige bevorzugte Kontrollgrössen im Aufbau sind beispielsweise:
Kohärenzlänge: groß genug für Messbereich, nicht zu groß wegen störender Interferenzen durch Streuung im Strahlengang
Shearwinkel: groß genug für hinreichend dichte Linienmuster, nicht zu groß, damit Kohärenz der Lichtquelle ausreicht, um über gesamten Detektor ein Interferenzmuster mit ausreichend Kontrast zu erzeugen.

Eine polarisierende Strahlaufspaltung, so vorhanden, addiert sich auf die Shearaufspaltung. Der Aufspaltungseffekt kann bei der Justage des Aufbaus teilweise zwischen den beiden Polarisationsrichtungen ausgemittelt werden. Durch passende Wahl von langsamer und schneller Achse bei der Aufspaltung kann ggf. weiter kompensiert werden. Typischerweise liegt die langsame Achse so, dass dieser Strahl auf dem inneren Weg verläuft.

Bei der Beleuchtung des DHM sollte bevorzugt darauf geachtet werden, dass diese entweder unpolarisiert ist oder bei vollständiger oder teilweiser Polarisation diese möglichst unter 45 Grad zu den später für die Strahlaufspaltung genutzten Achsen eingestellt ist. Über die Polarisation kann auch die Intensität auf die beiden Strahlengänge aufgeteilt werden, was zudem für eine Erhöhung des Dynamikbereichs bei den Messungen verwendet werden kann. So können z.B. die Messbereiche von Kameras mit Nichtlinearer Empfindlichkeit - sogenannte Lin/Log Kameras kombiniert werden und so der lineare Bereich z.B. um Faktor 2 erweitert werden. Alternativ oder ergänzend kann auch die Technik des HDR - High Dynamic Range - für die Kamera eingesetzt werden.

Mit der Wahl der Polarisationsrichtung bei linear polarisierten Lichtquellen oder mit der Vorzugsrichtung der Polarisation bei teilweise polarisierten Lichtquellen kann auch der Kontrast für die Anteile der Objektwelle aus der mikroskopischen Abbildung in gewissem Umfang mit beeinflusst werden. Wenn die Optik nicht polarisationserhaltend ausgeführt ist, dann kann die Vorausrichtung auch vom Strahlengang abhängig werden und es sollten solche Effekte bei der Justage des Systems berücksichtigt werden. Der Effekt ist hier nur prinzipiell benannt, weil er einen gewissen Einfluss auf die Qualität der Messung haben kann.

Zur Verrechnung der Streifenbilder, die ebenso als Fringebilder bezeichnet werden können, mit den unterschiedlichen Fringeperioden sollten die Fringemuster oder Streifenmuster bevorzugt die gleiche Amplitude bzw. alternativ Modulation haben. Dies kann durch passende Skalierung der Bilder relativ zueinander erreicht werden. Bei dieser Skalierung können dann auch die bewusst eingestellten Intensitätsunterschiede ausgeglichen werden, um ein bestmögliches synthetisches Fringemuster zu erhalten. Zu beachten ist hier, dass das Muster gut genug ist, um das synthetische Fringepattern zum sogenannten Phaseunwrapping nutzen zu können. Für die präzise Phasenauswertung kann dann das Fringemuster verwendet werden, das an dem jeweiligen Messort das günstigere Signal/Rauschverhältnis hat. So kann trotz der Dynamikanpassung bzw. -erweiterung mit hoher Auflösung gemessen werden.

Wenn mehr als zwei Fringemuster benötigt werden, die unabhängig voneinander detektiert werden können, so kann der Strahlengang vor dem Interferometer geteilt werden und der abgespaltene Strahl in ein zweites Interferometer mit wieder bis zu zwei Muster und zwei Kameras geleitet werden. So kann der über die Fringemuster erreichbare synthetische Messbereich deutlich erweitert werden. Hierbei gilt es zu beachten, dass der Tiefenschärfebereich der Abbildungsoptik begrenzt ist. Das zweite Interferometer kann dann auch unabhängig vom ersten Interferometer auf eine andere Objektebene scharf eingestellt werden.

Gemäß der beanspruchten Erfindung ist es vorgehen, dass mit dem ersten Abbildungsmodus ein Bild mit einer Strahlaufspaltung mit Shear in einer ersten Richtung und mit dem zweiten Abbildungsmodus ein Bild mit einer Strahlaufspaltung mit Shear in einer zweiten Richtung erzeugt wird.

Hierbei kann dann beispielsweise die Strahlaufspaltung für die Abbildungsmodi auch mit einem Amplituden- und/oder Phasengitter, beispielsweise einem Beugungsgitter erfolgen, welches nicht besonders beschränkt ist, und/oder einem doppelbrechenden Element. Gemäß bestimmten Ausführungsformen ist ein doppelbrechendes optisches Element, z.B. die doppelbrechende Platte 13 und/oder die doppelbrechende Materialschicht 15, in Strahlrichtung vor und/oder hinter dem Gitter angeordnet. Gemäß bestimmten Ausführungsformen wird jedoch ein doppelbrechendes optisches Element, z.B. die doppelbrechende Platte 13 und/oder die doppelbrechende Materialschicht 15, zur Aufspaltung der Strahlen (mit dem Shear) verwendet.

Gemäß der beanspruchten Erfindung wird mit dem ersten Abbildungsmodus ein Bild mit einer Strahlaufspaltung mit Shear in einer ersten Richtung und mit dem zweiten Abbildungsmodus ein Bild mit einer Strahlaufspaltung mit Shear in einer zweiten Richtung erzeugt, wobei mehrere doppelbrechende optische Elemente, z.B. 2, 3, 4 oder mehr, verwendet werden. Diese können dann beispielsweise unterschiedlich angeordnet sein, z.B. unter einem Drehwinkel, z.B. 90°, wobei die doppelbrechenden optischen Elemente aneinander anliegen können oder auch getrennt sein können und sich an unterschiedlichen Positionen im Strahlengang befinden können. Die doppelbrechenden optischen Elemente können hier beispielsweise die erfindungsgemäß genannten sein.

Ein weiterer Vorteil aus den zwei Interferometern ergibt sich, wenn die beiden Interferometer mit einer zueinander orthogonalen Shearebene angeordnet sind. Dadurch wird für jeden Objektpunkt in zumindest einer Richtung die Kontur mit bzw. ohne Shear abgebildet.

Der hier mit den zwei Interferometern dargestellte Weg lässt sich theoretisch auf n Interferometer erweitern - ggf. mit den genannten Randbedingungen. Die Trennung des Strahlengangs kann durch Teilung der Intensität mit vorbestimmtem Teilungsverhältnis erfolgen, mit Strahlteilung mittels Polarisation oder dichroitisch nach der Wellenlänge des Lichts oder auch Mischformen davon.

Mit dem Digitalen Holographischen Mikroskop gemäß der beanspruchten Erfindung können verschiedene Proben gemessen werden. Folglich betrifft die vorliegende Erfindung auch die Messung einer Probe mit der erfindungsgemäßen Vorrichtung. Insbesondere kann hierbei auch eine Tiefenmessung an der Probe vorgenommen werden.

Das Digitale Holographische Mikroskop gemäß der beanspruchten Erfindung ermöglicht eine verbesserte Erfassung von Proben mit einem verbesserten Eindeutigkeitsbereich bei den Messungen. Dies ist insbesondere bei biologischen und/oder medizinischen Proben vorteilhaft.

Eine Probe ist hierbei eine Probe, welche ein Objekt enthält, für das eine Messung mit der erfindungsgemäße Vorrichtung von Interesse ist. Die Probe ist hierbei nicht besonders beschränkt und kann auf geeignete Weise bereitgestellt werden, beispielsweise als in-vitro und/oder in vivo Probe im Falle medizinischer Proben. Die Probe kann hierbei insbesondere biologische und/oder medizinische Proben umfassen, welche nicht besonders beschränkt sind.

Biologische Proben sind hierbei Proben, die von einem Lebewesen, beispielsweise Tier (inklusive Mensch), Pflanze, Farn, Pilz, etc. abgeleitet sind, beispielsweise Zellen, Zellhaufen, Zellagglomerate, etc. Der Herkunftsort der biologischen Probe ist dabei nicht besonders beschränkt. Es ist auch nicht ausgeschlossen, dass die biologische Probe vor Durchführung einer Messung mit der erfindungsgemäßen Vorrichtung vorbehandelt wird, beispielsweise gewaschen, isoliert, fixiert, etc. wird, beispielsweise bei der Herstellung von Dünnschicht- oder Dickschichtproben. Mit der Dünnschichttechnik lassen sich beispielsweise Monolagen von Zellen erfassen, während in Dickschichttechnik auch Überlagerungen von mehreren Zellen gleicher oder verschiedener Art erfasst werden können.

Medizinische Proben sind beispielsweise Proben, welche von einer Körperflüssigkeit abgeleitet sind, oder Gewebeproben, z.B. Gewebeschnitte, z.B. in der Pathologie oder Histologie. Die Körperflüssigkeiten sind hierbei nicht beschränkt und umfassen Flüssigkeiten, Emulsionen und/oder Suspensionen, welche ihren Ursprung in Körpern von Lebewesen, beispielsweise auch Patienten haben. Diese können alle Flüssigkeiten umfassen, die von einem Körper ausgeschieden werden oder darin zirkulieren. Beispiele für Körperflüssigkeiten sind Körperfluide wie Blut, Urin, Spucke, Plasma, Serum, etc., wie auch Sekrete Die Probe kann beispielsweise von einem Patienten stammen, ist also beispielsweise ein klinisches Isolat. Die Probe kann hierbei beispielsweise von Wirbeltieren stammen, also auch die Tiermedizin betreffen, kann aber auch eine Probe von einem Menschen sein. Gemessen werden können beispielsweise auch Feststoffe, Sedimenten und/oder Mikrokristalle in solchen Körperfluiden und/oder Sekreten

Für die erfindungsgemäßen Verfahren ist es nicht ausgeschlossen, dass eine Probe vor der Messung mit der erfindungsgemäßen Vorrichtung noch behandelt wird, beispielsweise filtriert, extrahiert, gewaschen, verdünnt, mit Reagenzien gemischt, etc.

Auch sind verschiedene Verfahren offenbart, mit denen ein Gesamtbild, das beim erfindungsgemäßen Messverfahren erhalten wird, weiter hinsichtlich von darin erhaltenen Informationen analysiert wird.

So ist ein Verfahren zur Erfassung eines überlagerte Informationsanteile verschiedener Abbildungsmodi enthaltenden und mittels eines Digitalen Holographischen Mikroskops gemessenen Gesamtbildes, insbesondere einer Probe, beispielsweise einer biologischen Zellstruktur, eines Zellagglomerats, einer medizinischen Probe, und/oder von Feststoffen, Sedimenten und/oder Mikrokristallen in Körperfluiden und/oder Sekreten, im Objektraum, offenbart, mit den mittels einer Rechnereinrichtung ausgeführten Schritten eines variablen Einstellens eines Versatzes, insbesondere mittels Kippens einer doppelbrechenden Platte (13).

Die Rechnereinrichtung ist hierbei wie auch in anderen erfindungsgemäßen Verfahren nicht besonders beschränkt.

In diesem Verfahren ist die Probe nicht besonders beschränkt und umfasst beispielsweise solche für medizinische und/oder biologische Anwendungen, beispielsweise, insbesondere unverdünnten, Körperfluide oder Sekrete, die sowohl Agglomerate von Zellen enthalten können als auch Stoffanhäufungen in Form von Sedimenten oder auch Festkörpern wie Mikrokristallen, beispielsweise im Urin, Speichel oder Gallensaft. Insbesondere ist für die Messung an unverdünnten Fluiden oder Sekreten ein erweiterter Tiefenmessbereich von besonderem Nutzen, da so eine Messfähigkeit auch dann erreicht werden kann, selbst wenn sich Zellen zumindest teilweise überlagern.

Eine Tiefenmessung ist darüber hinaus auch von Interesse bei Dünnfilm bzw. Dickfilmuntersuchungen, beispielsweise von Blut, sowie bei Gewebeschnitten. Zellen können dabei auf festen oder flexiblen Substraten (z.B. Glas oder Plastik) in Suspension oder getrocknet vorliegen. Insofern kann hierbei bei einer Messung mit der erfindungsgemäßen Vorrichtung die Probe auch ein Dünnfilm, ein Dickfilm oder eine Gewebeprobe sein. Hierbei können dann beispielsweise Zellen bzw. Gewebeanteile erkannt und differenziert werden.

Daneben können auch große Zellen, Zellcluster und/oder Ablagerungen bzw. Feststoffe und Mikrokristalle in Körperfluiden und Sekreten erfindungsgemäß gemessen und im Gesamtbild analysiert werden. Ebenso können beispielsweise zeitliche Prozesse mit den erfindungsgemäßen Verfahren aufgelöst werden durch konsekutive Messungen, beispielsweise Blutgerinnungsprozesse, z.B. die Bildung von Zellagglomerationen aus Plateletts.

Die Messung im erfindungsgemäßen Messverfahren kann mit einer oder mit mehreren verschiedene Wellenlängen erfolgen.

Eine Erweiterung des Messbereichs mit derselben Wellenlänge bei der Messung hat hierbei insbesondere gegenüber einer synthetischen Wellenlänge aus unterschiedlichen Grundwellenlängen den großen Vorteil, dass mögliche Messfehler aufgrund von Materialdispersionen minimiert bzw. vermieden werden. Ferner können auch mögliche Absorptionsbanden, die z.B. in der Probe, z.B. einem Fluid oder Sekret, vorliegen oder ,z.B. über Medikamente im Sekret bzw. Fluid, verändert oder eingeführt werden, in der Wirkung auf die Messung minimiert werden.

Die Erweiterung des Messbereichs mit einer Wellenlänge hat zudem den Vorteil, dass für zusätzliche mikroskopische Messungen, wie Absorptionsmessungen oder Fluoreszenzmessungen, die mit einem erweiterten digital holographischen Mikroskop synchron vorgenommen werden, ein größerer Anteil des sichtbaren Spektrum für Absorption, Anregung oder Emission genutzt werden kann.

Auch offenbart ist ein Verfahren zur gemeinsamen Auswertung eines mittels eines Digitalen Holographischen Mikroskops gemessenen Gesamtbildes, beispielsweise einer biologischen Zellstruktur, mit einer ersten und einer zweiten Erfassungseinrichtung im Objektraum, wobei mittels einer Rechnereinrichtung die Polarisationswirkung der biologischen Zellstruktur bestimmt wird. Auch hierbei ergeben sich also Vorteile durch die Messung einer Probe mit der erfindungsgemäßen Vorrichtung bei der Auswertung des Gesamtbildes. Die Probe, mit der das Gesamtbild erzeugt wird, ist hierbei aber nicht auf eine biologische Zellstruktur beschränkt, sondern umfass allgemein Proben, bei denen eine getrennte Bildgebung mit unterschiedlichen Polarisationsrichtungen einen Effekt hervorruft.

Bei den Verfahren zur Analyse des Gesamtbildes kann das gemessene Gesamtbild auch digital durchfokussiert werden, wobei die Art der Durchfokussierung nicht besonders beschränkt ist. Beispielsweise können hierfür auch Bildstapel gemessen werden.

Hierbei kann man beispielsweise dann bei Dünnfilmen den Zellkern aus der Ebene der getrockneten Zellen studieren, bzw. auch entsprechende Messebenen von Interesse beispielsweise bei Zellaggregaten und/oder Kristallen auswählen, z.B. ein Arzt bei einer späteren Auswertung.

## Patentansprüche

1. Digitales Holographisches Mikroskop (1) mit einem Interferometer zur Erfassung und Bearbeitung eines mit einem ersten Versatz gemessenen ersten Gesamtbildes eines Messobjekts, mit einer Einrichtung zur Erzeugung mindestens eines weiteren Gesamtbildes des Messobjekts mit mindestens einem zum ersten Versatz verschiedenen Versatz, und mit einem ersten Abbildungsstrahlpfad für einen ersten Abbildungsmodus und einem zweiten Abbildungsstrahlpfad für einen zweiten Abbildungsmodus,
wobei Informationsanteile des ersten Abbildungsmodus und des zweiten Abbildungsmodus in dem ersten und dem weiteren Gesamtbild des Messobjekts überlagert sind;
wobei der erste Abbildungsmodus ein Bild mit einer Strahlaufspaltung mit Shear in einer ersten Richtung und der zweite Abbildungsmodus ein Bild mit einer Strahlaufspaltung mit Shear in einer zweiten Richtung erzeugt, wobei
ein polarisierender Strahlteiler (17) in dem ersten Abbildungsstrahlpfad nach dem Interferometer angeordnet ist, wobei in den Strahlengängen nach dem polarisierenden Strahlteiler (17) eine erste Erfassungseinrichtung (9) das erste Gesamtbild des Messobjekts im Objektraum und eine zweite Erfassungseinrichtung (19) ein zweites Gesamtbild des Messobjekts im Objektraum zeitgleich erfassen.

2. Digitales Holographisches Mikroskop (1) gemäß Anspruch 1,
**gekennzeichnet dadurch, dass**
beide Pfade zumindest teilweise überlagert sind und Daten eines Gesamtbildes in einer Rechnereinrichtung bearbeitbar und insbesondere in einer Speichereinrichtung speicherbar sind.

3. Digitales Holographisches Mikroskop (1) gemäß Anspruch 1 oder 2,
**dadurch gekennzeichnet, dass**
die Strahlaufspaltung für die Abbildungsmodi mit einem Amplituden- und/oder Phasengitter erfolgt, und ein doppelbrechendes optisches Element zur Aufspaltung der Strahlen verwendet wird.

4. Digitales Holographisches Mikroskop (1) gemäß einem der Ansprüche 1 bis 3,
**dadurch gekennzeichnet, dass**
die Einrichtung zur Erzeugung des mindestens einen weiteren Gesamtbildes des Messobjekts ein doppelbrechendes optisches Element zur Strahlaufspaltung mit Shear aufweist.

5. Digitales Holographisches Mikroskop (1) gemäß Anspruch 4,
**dadurch gekennzeichnet, dass**
das doppelbrechende optische Element eine doppelbrechende Platte (13) ist, die Kalkspat aufweist, wobei
die doppelbrechende Platte (13) planparallel oder keilförmig ausgebildet ist.

6. Digitales Holographisches Mikroskop (1) gemäß Anspruch 5,
**dadurch gekennzeichnet, dass**
die doppelbrechende Platte (13) im zweiten Abbildungsstrahlpfad positioniert ist.

7. Digitales Holographisches Mikroskop (1) gemäß Anspruch 6,
**dadurch gekennzeichnet, dass**
die doppelbrechende Platte (13) im zweiten Abbildungsstrahlpfad zu und/oder von einem Versatzspiegel (10) positioniert ist.

8. Digitales Holographisches Mikroskop (1) gemäß Anspruch 4,
**dadurch gekennzeichnet, dass**
die Einrichtung zur Erzeugung des mindestens einen weiteren Gesamtbildes eine doppelbrechende Materialschicht (15) auf einem Versatzspiegel (10) aufweist, wobei die doppelbrechende Materialschicht (15) planparallel oder keilförmig ausgebildet ist.

9. Digitales Holographisches Mikroskop (1) gemäß einem der vorhergehenden Ansprüche, **dadurch gekennzeichnet, dass** das Interferometer, in einer Michelson-Bauart oder in einer Mach-Zehnder-Bauart geschaffen ist.

10. Verfahren zur Erfassung eines überlagerte Informationsanteile verschiedener Abbildungsmodi enthaltenden und mittels eines Digitales Holographisches Mikroskops (1) gemäß einem der vorhergehenden Ansprüche gemessenen Gesamtbildes eines Messobjekts, im Objektraum, mit den mittels einer Rechnereinrichtung ausgeführten Schritten:
variables Einstellen eines Versatzes, und
Erfassen des Gesamtbildes des Messobjekts mit einer Erfassungseinrichtung.

11. Verfahren zur Auswertung eines mittels eines Digitalen Holographischen Mikroskops (1) gemäß einem der Ansprüche 1 bis 9 gemessenen Gesamtbildes eines Messobjekts, wobei mittels einer Rechnereinrichtung die Polarisationswirkung des Messobjekts bestimmt wird.

12. Verfahren nach Anspruch 10 oder 11, wobei das gemessene Gesamtbild digital durchfokussiert wird.

13. Verfahren zur Charakterisierung einer Probe, wobei eine Probe mit einem Digitalen Holographischen Mikroskop nach einem der Ansprüche 1 bis 9 gemessen wird.

## Claims

1. Digital holographic microscope (1) having an interferometer for capturing and processing a first overall image of a measurement object that was measured with a first offset, having a device for generating at least one further overall image of the measurement object with at least one offset that differs from the first offset, and
having a first imaging beam path for a first imaging mode and a second imaging beam path for a second imaging mode,
wherein information portions of the first imaging mode and of the second imaging mode are overlayed in the first and the further overall image of the measurement object;
wherein the first imaging mode generates an image with beam splitting with shear in a first direction, and the second imaging mode generates an image with beam splitting with shear in a second direction, wherein
a polarizing beam splitter (17) is arranged downstream the interferometer in the first imaging beam path, wherein in the beam paths downstream of the polarizing beam splitter (17), a first capture device (9) captures the first overall image of the measurement object in the object space and, simultaneously, a second capture device (19) captures a second overall image of the measurement object in the object space.

2. Digital holographic microscope (1) according to Claim 1, **characterized in that**
both paths are at least partially overlaid, and data of an overall image can be edited in a computer device and, in particular, can be stored in a memory device.

3. Digital holographic microscope (1) according to Claim 1 or 2,
**characterized in that**
beam splitting for the imaging modes is implemented using an amplitude and/or phase grating, and a birefringent optical element is used to split the beams.

4. Digital holographic microscope (1) according to any of Claims 1 to 3,
**characterized in that**
the device for generating the at least one further overall image of the measurement object comprises a birefringent optical element for beam splitting with shear.

5. Digital holographic microscope (1) according to Claim 4,
**characterized in that**
the birefringent optical element is a birefringent plate (13) comprising calcite, wherein
the birefringent plate (13) has a plane-parallel or wedge-shaped embodiment.

6. Digital holographic microscope (1) according to Claim 5,
**characterized in that**
the birefringent plate (13) is positioned in the second imaging beam path.

7. Digital holographic microscope (1) according to Claim 6,
**characterized in that**
the birefringent plate (13) is positioned in the second imaging beam path to and/or from an offset mirror (10).

8. Digital holographic microscope (1) according to Claim 4,
**characterized in that**
the device for generating the at least one further overall image comprises a birefringent material layer (15) on an offset mirror (10), wherein the birefringent material layer (15) has a plane-parallel or wedge-shaped embodiment.

9. Digital holographic microscope (1) according to any of the preceding claims, **characterized in that**
the interferometer is created as a Michelson-type or as a Mach-Zehnder-type construction.

10. Method for capturing, in the object space, an overall image of a measurement object that contains overlaid information portions from different imaging modes and is measured by means of a digital holographic microscope (1) according to any of the preceding claims, the method including the following steps carried out by means of a computer device:
setting an offset variably, and
capturing the overall image of the measurement object using a capture device.

11. Method for evaluating an overall image of a measurement object that was measured by means of a digital holographic microscope (1) according to any of Claims 1 to 9, wherein the polarization effect of the measurement object is determined by means of a computer device.

12. Method according to Claim 10 or 11, wherein the measured overall image is digitally scanned through the focal planes.

13. Method for characterizing a sample, wherein a sample is measured using a digital holographic microscope according to any of Claims 1 to 9.

## Revendications

1. Microscope (1) holographique numérique comprenant un interféromètre pour la prise et le traitement d'une première image d'ensemble, mesurée par un premier décalage, d'un objet de mesure, comprenant un dispositif de production d'au moins une autre image d'ensemble de l'objet de mesure par au moins un décalage différent du premier décalage, et
comprenant un premier chemin de rayon de représentation pour un premier mode de représentation et un deuxième chemin de rayon de représentation pour un deuxième mode de représentation,
dans lequel des proportions d'information du premier mode de représentation et du deuxième mode de représentation sont superposées dans la première et dans l'autre image d'ensemble de l'objet de mesure ;
dans lequel le premier mode de représentation produit une image par une subdivision du rayon avec shear dans une première direction et le deuxième mode de représentation produit une image par une subdivision du rayon avec shear dans une deuxième direction, dans lequel
un diviseur (17) de faisceau polarisant est monté dans le premier chemin du rayon de représentation après l'interféromètre, dans lequel dans les chemins de rayon après le diviseur (17) de faisceau polarisant un premier dispositif (9) de prise prescrit la première image d'ensemble de l'objet de mesure dans l'espace objet et un deuxième dispositif (19) de prise prescrit en même temps une deuxième image d'ensemble de l'objet de mesure dans l'espace objet.

2. Microscope (1) holographique numérique suivant la revendication 1,
**caractérisé en ce que**
les deux chemins sont superposés au moins en partie et des données d'une image d'ensemble peuvent être traitées dans un dispositif informatique et en particulier être mises en mémoire dans un dispositif de mémoire.

3. Microscope (1) holographique numérique suivant la revendication 1 ou 2,
**caractérisé en ce que**
la subdivision de rayon pour les modes de représentation s'effectue avec une grille d'amplitude et/ou de phase et on utilise un élément optique biréfringent pour la subdivision des faisceaux.

4. Microscope (1) holographique numérique suivant l'une des revendications 1 à 3,
**caractérisé en ce que**
le dispositif de production de au moins une autre image d'ensemble de l'objet de mesure a un élément optique biréfringent pour la subdivision du faisceau avec shear.

5. Microscope (1) holographique numérique suivant la revendication 4,
**caractérisé en ce que**
l'élément optique biréfringent est une lame (13) biréfringente, qui a du spath d'Islande, dans lequel
la lame (13) biréfringente est de constitution parallèle à un plan ou cunéiforme.

6. Microscope (1) holographique numérique suivant la revendication 5,
**caractérisé en ce que**
la lame (13) biréfringente est mise en position dans le deuxième chemin de rayon de représentation.

7. Microscope (1) holographique numérique suivant la revendication 6,
**caractérisé en ce que**
la lame (13) biréfringente est mise en position dans le deuxième chemin du rayon de représentation et/ou par un miroir (10) de décalage.

8. Microscope (1) holographique numérique suivant la revendication 4,
**caractérisé en ce que**
le dispositif de production d'au moins une autre image d'ensemble a une couche (15) de matériau biréfringent sur un miroir (10) de décalage, la couche (15) de matériau biréfringent étant de constitution parallèle à un plan ou cunéiforme.

9. Microscope (1) holographique numérique suivant l'une des revendications précédentes,
**caractérisé en ce que** l'interféromètre est dans un type de construction Michelson ou dans un type de construction Mach-Zehnder.

10. Procédé de détection d'une image d'ensemble contenant des proportions d'information superposées de modes de représentation différents et mesurée au moyen d'un microscope (1) holographique numérique suivant l'une des revendications précédentes, d'un objet de mesure, dans l'espace objet, comprenant les stades exécutés au moyen d'un dispositif informatique :
réglage variable d'un décalage et
prise de l'image d'ensemble de l'objet de mesure par un dispositif de prise.

11. Procédé d'évaluation d'une image d'ensemble, mesurée au moyen d'un microscope (1) holographique numérique suivant l'une des revendications 1 à 9, d'un objet de mesure, dans lequel on détermine l'effet de polarisation de l'objet de mesure au moyen d'un dispositif informatique.

12. Procédé suivant la revendication 10 ou 11, dans lequel on focalise numériquement l'image d'ensemble mesurée.

13. Procédé de caractérisation d'un échantillon, dans lequel on mesure un échantillon par un microscope holographique numérique suivant l'une des revendications 1 à 9.
